# EUROPEAN PATENT SPECIFICATION

(11) **EP 2 765 735 B1**
(45) Date of publication and mention of the grant of the patent: **27.04.2016**
(21) Application number: 11867151.0
(22) Date of filing: 09.11.2011
(51) Int. Cl.: H04L 12/18, H04L 29/08, H04L 29/12, H04Q 11/00

(54) **METHOD, SYSTEM AND APPARATUS FOR IMPLEMENTING INTERCOMMUNICATION MULTICAST IN PASSIVE OPTICAL NETWORK**
VERFAHREN, SYSTEM UND VORRICHTUNG ZUR IMPLEMENTIERUNG EINES KOMMUNIKATIONSÜBERGREIFENDEN MULTICASTS IN EINEM PASSIVEN OPTISCHEN NETZWERK
PROCÉDÉ, SYSTÈME ET APPAREIL D'IMPLÉMENTATION D'UNE MULTIDIFFUSION D'INTERCOMMUNICATION DANS UN RÉSEAU OPTIQUE PASSIF

(43) Date of publication of application: 13.08.2014
(73) Proprietor: Huawei Technologies Co., Ltd., Longgang District Shenzhen, Guangdong 518129 (CN)
(72) Inventor: LIU, Yu, Shenzhen Guangdong 518129 (CN)
(74) Representative: Isarpatent
(86) International application number: PCT/CN2011/081985
(87) International publication number: WO 2012/167541

(56) References cited:
- EP-A1- 2 139 157
- CN-A- 1 458 771
- CN-A- 1 852 258
- CN-A- 101 202 591
- US-A1- 2009 260 083
- SHUAI ZHANG ET AL: "Efficient transport of packets with multicast mechanism in GPON", DIGITAL CONTENT, MULTIMEDIA TECHNOLOGY AND ITS APPLICATIONS (IDC), 2010 6TH INTERNATIONAL CONFERENCE ON, IEEE, PISCATAWAY, NJ, USA, 16 August 2010 (2010-08-16), pages 145-149, XP031751259, ISBN: 978-1-4244-7607-7

## Description

### TECHNICAL FIELD

The present invention relates to a passive optical network technology, and in particular, to a method, a system and an apparatus for implementing interworking multicast in a passive optical network.

### BACKGROUND

A passive optical network (GPON, Gigabit-Capable Passive Optical Network) includes an optical line terminal (OLT, Optical Line Terminal) and an optical network terminal (ONT, Optical Network Terminal)/optical network unit (ONU, Optical Network Unit). In an early layout stage of a GPON, an operator purchases an OLT and an ONT from different equipment manufactures. Because equipment manufactures customize their own specific multicast communication protocols, normal multicast communication fails to be performed between an OLT and an ONT produced by different equipment manufactures.

In ITU-T G984.4 and G988 standard protocols, an implementation method for interworking multicast between an OLT and an ONT produced by different equipment manufactures in a GPON is described in detail, which solves a problem that multiple subscribers of the same Ethernet port of the ONT watch different multicast programs in different MVLANs (Multicast Virtual Local Area Network, multicast virtual local area network). However, for a scenario that multiple subscribers of the same ONT watch the same program in multiple different MVLANs, descriptions are not provided in the foregoing standard protocols.

In the prior art, the foregoing problem is solved by using a manner that multiple layer 2 forwarding entries are delivered to one subscriber watching one program. However, this manner in the prior art causes that layer 2 forwarding entries are rapidly used up in a scenario of multiple MVLANs, so that a new subscriber cannot watch a program, and meanwhile, because an MVLAN of a multicast program cannot be determined, it also causes that an OLT cannot normally monitor a multicast service of a multicast subscriber.

### SUMMARY

In order to solve the problem existing in the prior art, embodiments of the present invention provide a method, a system and an apparatus for implementing interworking multicast in a passive optical network.

A method for implementing interworking multicast in a passive optical network provided in an embodiment of the present invention includes: receiving a multicast operations profile entity and a multicast subscriber information entity, where the multicast operations profile entity includes a dynamic access control list ACL, and correspondence exists between the multicast subscriber information entity and an ACL entry of the multicast operations profile entity; wherein each multicast subscriber information entity comprises an ACL pointer, and the ACL pointer is used to point to the ACL entry corresponding to the multicast subscriber information entity in the multicast operations profile entity; receiving an Internet group management protocol IGMP join packet, and obtaining multicast subscriber information carried in the IGMP join packet; searching for a multicast subscriber information entity matched with the multicast subscriber information that is obtained from the IGMP join packet; uniquely determining, according to preset correspondence between the multicast subscriber information entity and the ACL entry, an ACL entry corresponding to the found multicast subscriber information entity; and creating a layer 2 forwarding entry according to the uniquely determined ACL entry.

A system for implementing interworking multicast in a passive optical network provided in an embodiment of the present invention includes a central office equipment, an optical network terminal ONT, and a subscriber terminal, where
the central office equipment is configured to send a multicast operations profile entity and a multicast subscriber information entity to the ONT, where the multicast operations profile entity includes a dynamic access control list ACL, and correspondence exists between the multicast subscriber information entity and an ACL entry of the multicast operations profile entity; wherein each multicast subscriber information entity comprises an ACL pointer, and the ACL pointer is used to point to the ACL entry corresponding to the multicast subscriber information entity in the multicast operations profile entity;
the subscriber terminal is configured to send an IGMP join packet to the ONT; and
the ONT is configured to receive the IGMP join packet, and obtain multicast subscriber information carried in the IGMP join packet, search for a multicast subscriber information entity matched with the multicast subscriber information that is obtained from the IGMP join packet, uniquely determine, according to preset correspondence between the multicast subscriber information entity and the ACL entry, an ACL entry corresponding to the found multicast subscriber information entity, and create a layer 2 forwarding entry according to the uniquely determined ACL entry.

An apparatus for implementing interworking multicast in a passive optical network provided in an embodiment of the present invention includes:
a receiving module, configured to receive a multicast operations profile entity, a multicast subscriber information entity, and an IGMP join packet, where the multicast operations profile entity includes a dynamic access control list ACL, and correspondence exists between the multicast subscriber information entity and an ACL entry of the multicast operations profile entity; wherein each multicast subscriber information entity comprises an ACL pointer, and the ACL pointer is used to point to the ACL entry corresponding to the multicast subscriber information entity in the multicast operations profile entity;
a parsing module, configured to parse the IGMP join packet to obtain multicast subscriber information carried in the IGMP join packet;
a comparing module, configured to search for a multicast subscriber information entity matched with the multicast subscriber information that is obtained from the IGMP join packet;
an ACL entry determining module, configured to uniquely determine, according to preset correspondence between the multicast subscriber information entity and the ACL entry, an ACL entry corresponding to the found multicast subscriber information entity; and
a forwarding entry creating module, configured to create a layer 2 forwarding entry according to the uniquely determined ACL entry.

With the method, the system, and the apparatus for implementing interworking multicast in a passive optical network provided in the foregoing embodiments of the present invention, a multicast subscriber information entity is delivered when interworking multicast configuration is performed on an ONT, and in a scenario in which multiple subscribers of interworking multicast in a GPON watch the same program in multiple MVLANs, an ACL is uniquely determined by comparing subscriber information of a subscriber terminal with effective subscriber information in the multicast subscriber information entity, so as to determine an MVLAN ID, and smoothly create a layer 2 forwarding entry, thereby implementing interworking multicast in a passive optical network and saving a layer 2 forwarding entry resource, so that normal monitoring on a multicast service is not affected.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some descriptions of the prior art and embodiments of the present invention, and persons of ordinary skill in the art may still derive other drawings from these accompanying drawings without creative efforts.
FIG. 1 is a schematic diagram of a scenario in which multiple STBs demands the same multicast program in multiple MVLANs;
FIG. 2 is a flow chart of implementing interworking multicast in a passive optical network according to an embodiment of the present invention;
FIG. 3 is a flow chart of specifically performing step 201 in the method shown in FIG. 2;
FIG. 4 is a flow chart of specifically performing step 206 in the method shown in FIG. 2; and
FIG. 5 is a schematic structural diagram of an apparatus for implementing interworking multicast in a passive optical network according to an embodiment of the present invention.

### DESCRIPTION OF EMBODIMENTS

In the prior art, a manner that multiple layer 2 forwarding entries are delivered to one subscriber watching one program is adopted, which causes a problem of wasting a hardware entry resource and a problem of an OLT monitoring failure when multiple subscribers of the same ONT watch the same program in multiple different MVLANs. To solve the problems exiting in the prior art, an embodiment of the present invention provides a method for implementing interworking multicast in a GPON.

According to an ITU-T G984.4 standard, when performing an OMCI (ONT ManaGEMent and Control Interface) protocol configuration on an ONT, the OLT sends, to the ONT, the following:
(1) a MAC (Media Access Control, media access control) bridge port configuration data (MAC Bridge Port Configuration Data) entity, used to represent configuration data of a subscriber-side Ethernet port;
(2) a multicast subscriber configuration information (Multicast Subscriber Configuration Information) entity, used to configure concurrent port multicast number, a maximum port multicast bandwidth, and a mandatory port bandwidth check identification, where this entity also includes a pointer pointing to a multicast operations profile (Multicast Operations Profile) entity;
(3) the multicast operations profile (Multicast Operations Profile) entity, used to configure a VLAN (Virtual Local Area Network, virtual local area network) of an uplink IGMP (Internet Group ManaGEMent Protocol, Internet group management protocol) packet, uplink protocol packet rate limit, a multicast dynamic access control list (ACL, Access Control List), multicast fast-leave, and how to process an IGMP join packet if ACL authentication fails; and
(4) a multicast subscriber monitor information (Multicast Subscriber Monitor) entity, used to query relevant state information of a multicast subscriber on an ONT port, and including: a current on-demand program bandwidth, counting of an IGMP join packet of which ACL authentication succeeds, counting of an IGMP join packet that an on-demand program exceeds a bandwidth limit, and a dynamic multicast subscriber list, where the dynamic multicast subscriber list includes the following content: a multicast VLAN, a program source IP address, a multicast program IP address, an actual multicast program bandwidth, a subscriber IP address, and subscriber online time.

The MAC bridge port configuration data entity implicitly correlates with and manages the multicast subscriber configuration information entity and the multicast subscriber monitor information entity.

An ACL entry includes an MVLAN ID, a multicast program starting IP address and a multicast program ending IP address; and an IGMP packet includes a multicast program IP address, a source MAC, and a destination MAC.

When a subscriber demands a certain multicast program through an STB (Set Top Box, set top box), the STB sends an IGMP join packet to an ONT; the ONT parses the IGMP join packet to obtain a multicast program IP address, a subscriber VLAN ID, and a subscriber source MAC that are carried in the IGMP join packet and then searches for a matched ACL through the multicast program IP address; the ONT converts the multicast program IP address into a multicast program MAC address (that is, MMAC), obtains an MVLAN ID from the matched ACL, creates a layer 2 forwarding entry through the MMAC address, the MVLAN ID, and a number of a local area network (LAN, Local Area Network) port connected to the STB, delivers the layer 2 forwarding entry to ONT hardware, and gets through a forwarding channel from a passive optical network port of the ONT to the local area network port; and the ONT sends the IGMP join packet to an OLT. In this way, interworking multicast is implemented between the OLT and the ONT, and the subscriber can smoothly watch a multicast program.

In addition, when performing multicast program monitoring on the subscriber, the OLT also needs a multicast virtual local area network MVLAN to determine the subscriber is watching a multicast program provided by which residential service provider (Residential Service Provider, RSP).

However, after completing construction of a GPON, an operator may lease the same local area network port of an ONT to multiple RSPs, and each RSP corresponds to one unique MVLAN; different RSPs may provide the same program; and one STB subscriber cannot simultaneously select services provided by two or more RSPs because in this way an STB may receive two or more multicast streams, so that the STB subscriber cannot normally watch a multicast program.

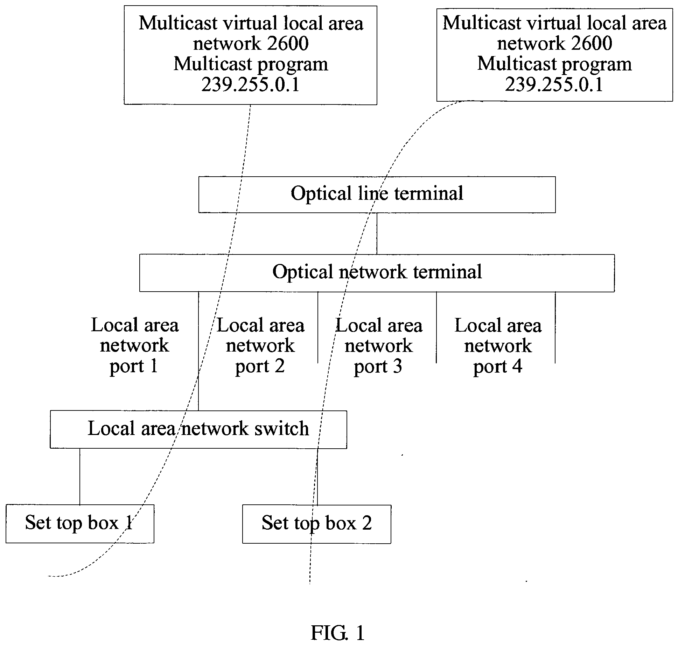

As shown in FIG. 1, an ONT has multiple LAN (Local Area Network, local area network) ports; each LAN port is connected to one LSW (Local Area Network Switch, local area network switch), and each LSW is connected to multiple STBs. An OLT configures the same multicast program 239.255.0.1 in an MVLAN2600 and an MVLAN3000. An RSP1 of which an MVLAN is 2600 provides a service for an STB1, and an RSP2 of which an MVLAN is 3000 provides a service for an STB2. When the STB1 demands the multicast program 239.255.0.1 in the MVLAN that is 2600, the ONT authenticates, through an ACL, an IGMP join packet sent out by the STB1. Because that the ONT authenticates the IGMP join packet is based on multicast program IP address information included in the IGMP join packet, the ONT finds two ACLs of which multicast program IP addresses are 239.255.0.1, which are an ACL of which an MVLAN is 2600 and a multicast program IP address is 239.255.0.1 and an ACL of which an MVLAN is 3000 and a multicast program IP address is 239.255.0.1. Therefore, the ONT cannot determine a program in which MVLAN is to be watched by the STB 1. Because the ONT needs an MMAC address and an MVLAN ID to create a layer 2 forwarding entry, but now only the MMAC address can be determined according to the IGMP join packet while the MVLAN ID cannot be determined, the ONT cannot correctly create a layer 2 forwarding entry, so that a multicast program cannot be normally watched, and meanwhile he OLT cannot monitor a multicast service of a subscriber.

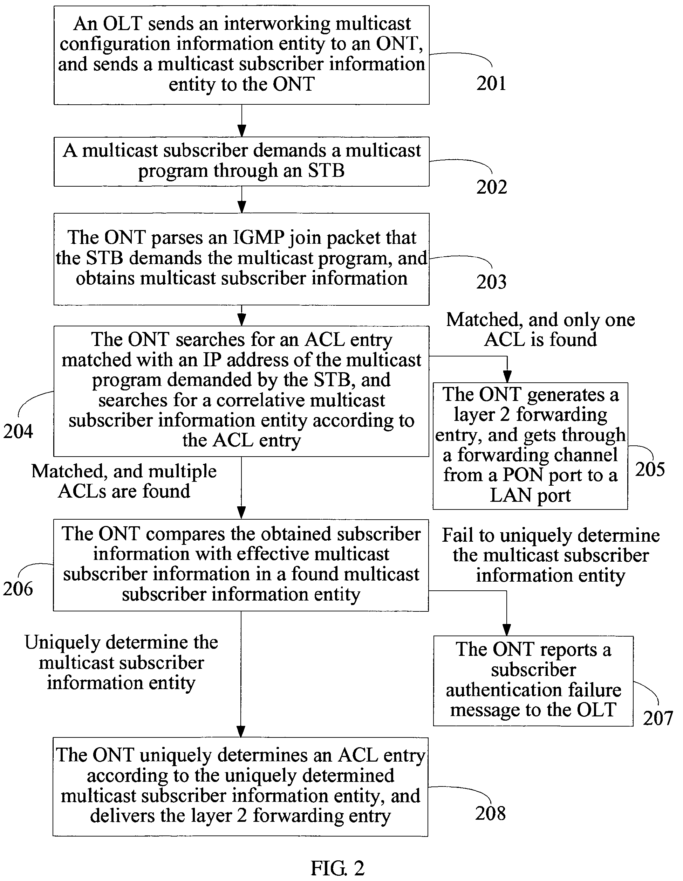

For the foregoing problems, an embodiment of the present invention provides a method for implementing interworking multicast in a passive optical network, as shown in FIG. 2.

Step 201: An OLT sends an interworking multicast configuration information entity to an ONT, and sends a multicast subscriber information (Multicast User Information) entity to the ONT.

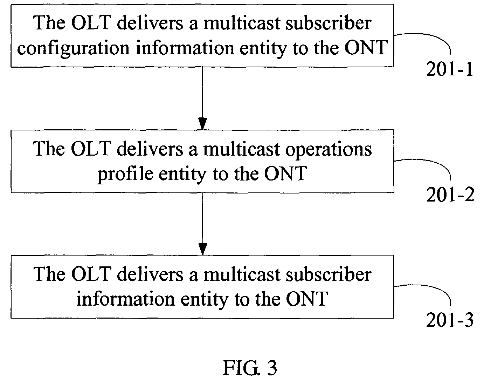

Step 201 may include three sub-steps, as shown in FIG. 3.

Step 201-1: The OLT delivers a multicast subscriber configuration information entity to the ONT.

The multicast subscriber configuration information entity includes a pointer pointing to a multicast operations profile entity.

Step 201-2: The OLT delivers, to the ONT, the multicast operations profile entity pointed by the multicast subscriber configuration information entity.

A multicast operations profile information entity includes a multicast dynamic control access list (ACL), where the ACL includes multiple ACL entries, and an ACL entry includes the following information:
Index: an entry Index;
multicast GEM port: a multicast GEM port ID;
multicast VLAN: an MVLAN ID;
multicast SrcIP address: an IP address of a multicast program source;
multicast program starting IP address: a minimum IP address allowing a multicast program to be watched;
multicast program ending IP address: a maximum IP address allowing a multicast program to be watched; and
program bandwidth: a bandwidth of a multicast program.

Step 201-3: The OLT delivers N multicast subscriber information entities correlating with the ACL entry in the multicast operations profile information entity to the ONT.

The multicast subscriber information entity is used to identify effective multicast subscriber information, including a subscriber VLAN ID, a subscriber MAC address, and a subscriber GEM port-ID. The subscriber MAC address is used to uniquely identify a multicast subscriber; the subscriber VLAN is used to identify multiple multicast subscribers of the same RSP; the subscriber GEM port-ID is used to identify multiple multicast subscribers of multiple RSPs providing the same type of service. Preset correspondence exists between the multicast subscriber information entity and the ACL entry in the multicast operations profile entity, and the multicast subscriber information entity further includes an ACL pointer, used to point to an ACL entry corresponding to the multicast subscriber information entity. There may be 1: 1 correspondence and may also be 1: N correspondence between the ACL entry in the foregoing multicast operations profile entity and the multicast subscriber information entity, that is to say, N multicast subscribers are allowed to watch a multicast program specified by one ACL entry.

In a procedure of delivering configuration of interworking multicast in a GPON, an OLT delivers a multicast operations profile entity and a corresponding multicast subscriber information entity to an ONT, and the ONT determines, through an ACL pointer in the multicast subscriber information entity, a program ACL that can be watched by a subscriber set that is indicated by multicast subscriber information. In this way, a mapping between the multicast subscriber information and the ACL is created on the ONT, and the ONT knows which subscribers are allowed to watch a multicast program in each MVLAN.

Step 202: A multicast subscriber demands a multicast program through an STB.

When a subscriber demands a multicast program through a subscriber terminal device, such as an STB, an IGMP join packet is sent to the ONT. To facilitate description, this embodiment is described by taking that an STB serves as a subscriber terminal device for demanding a multicast program as an example. The IGMP join packet may include information, such as a multicast program IP address, a MAC address of the STB, and a subscriber VLAN ID.

Step 203: The ONT parses an IGMP join packet that the STB demands the multicast program, and obtains multicast subscriber information.

The multicast subscriber information may include a multicast program IP address, a MAC address of the multicast subscriber, and a GEM port-ID of the multicast subscriber.

The ONT parses the IGMP join packet, identifies an IP address of the multicast program demanded by the STB, obtains a MAC address of the STB (that is, a source MAC address) and a subscriber VLAN ID that is carried in the IGMP join packet, and at the same time, obtains, through the subscriber VLAN ID, a subscriber GEM port-ID corresponding to a subscriber GEM port channel that bears the IGMP join packet, and converts the multicast program IP address into an MMAC address, where one subscriber GEM port channel may bear data packets of multiple different subscriber VLANs.

Step 204: The ONT searches for an ACL entry matched with the IP address of the multicast program demanded by the STB, and searches for a correlative multicast subscriber information entity according to the ACL entry;

The ONT may find, by determining whether the IP address of the multicast program demanded by the STB is within a range between a multicast program starting IP address and a multicast program ending IP address of an ACL entry, an ACL entry matched with the IP address of the multicast program demanded by the STB.

For example, the ONT matches the IP address of the program demanded by the STB with a multicast program IP address that corresponds to an address between the multicast program starting IP address and the multicast program ending IP address of the ACL entry in the multicast operations profile entity delivered by the OLT. If no ACL entry matched with the multicast program IP address is found, the ONT does not perform processing, and the STB fails to demand the multicast program; if a matched ACL entry is found, and there is only one ACL entry, step 205 is performed; and if an ACL entry matched with the multicast program IP address is found, and the number of ACL entries is multiple, the ONT finds, through the multiple ACL entries, multicast subscriber information entities corresponding to the ACL entries, step 206 is performed.

Step 205: The ONT generates a layer 2 forwarding entry, and gets through a forwarding channel from a PON port to a LAN port according to the layer 2 forwarding entry.

Because one ACL is uniquely determined through step 204, the ONT can uniquely determine an MVLAN ID. The ONT has already determined the MMAC address through step 203. In this way, the ONT can create a layer 2 forwarding entry according to the MMAC address, the MVLAN ID, and a number of a LAN port connected to the STB, and then delivers the layer 2 forwarding entry, gets through a forwarding channel from a PON port of the ONT to a LAN port of the ONT, and sends the IGMP join packet to the OLT.

Step 206: The ONT compares the obtained multicast subscriber information with effective multicast subscriber information in a found multicast subscriber information entity.

There may be multiple multicast subscriber information entities corresponding to multiple ACLs. The ONT uniquely determines a multicast subscriber information entity by comparing the MAC address, the subscriber VLAN ID, and the subscriber GEM port-ID of the STB obtained through step 203 with the subscriber MAC address, the subscriber VLAN ID, and the subscriber GEM port-ID in the subscriber information entity.

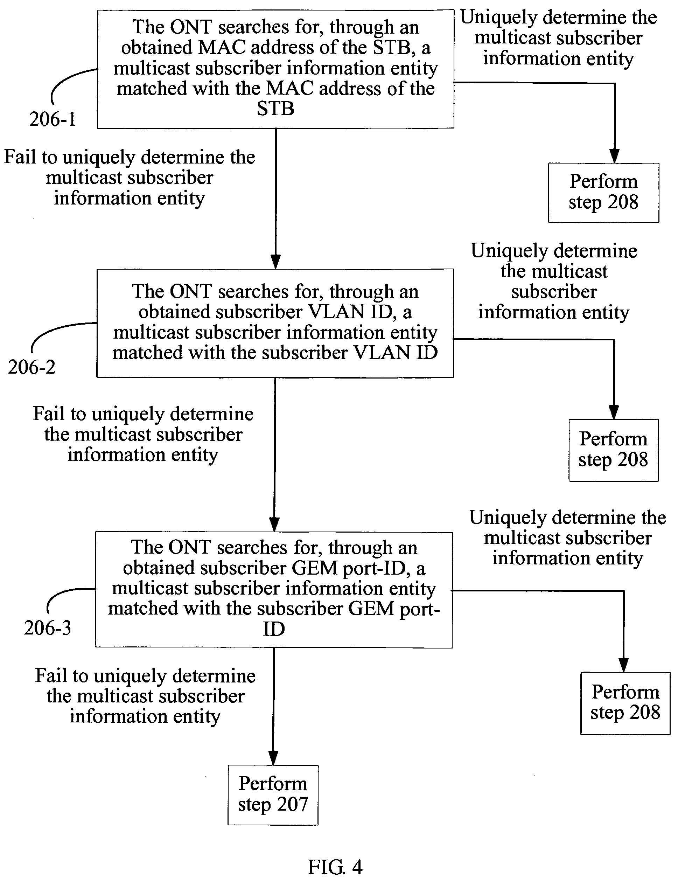

As shown in FIG. 4, step 206 may be implemented through the following multiple sub-steps.

Step 206-1: The ONT searches for, through the obtained MAC address of the STB, a multicast subscriber information entity matched with the MAC address of the STB.

The multicast subscriber information entity also includes the subscriber MAC address; the ONT finds, by comparing the MAC address of the STB obtained through step 203 with the subscriber MAC address in the multicast subscriber information entity, the multicast subscriber information entity matched with the MAC address of the STB, that is, uniquely determines the multicast subscriber information entity; if the ONT finds the multicast subscriber information entity matched with the MAC address of the STB, that is, the ONT can uniquely determine the multicast subscriber information entity, step 208 is performed; and if the ONT does not find the multicast subscriber information entity matched with the MAC address of the STB, step 206-2 is performed continuously.

Step 206-2: The ONT searches for, through the obtained subscriber VLAN ID, a multicast subscriber information entity matched with the subscriber VLAN ID.

The multicast subscriber information entity also includes the subscriber VLAN ID; the ONT finds, by comparing the subscriber VLAN ID obtained through step 203 with the subscriber VLAN ID in the multicast subscriber information entity, the multicast subscriber information entity matched with the subscriber VLAN ID, that is, uniquely determines the multicast subscriber information entity; if the ONT finds the multicast subscriber information entity matched with the subscriber VLAN ID, that is, the ONT can uniquely determine the multicast subscriber information entity, step 208 is performed; and if the ONT does not find the multicast subscriber information entity matched with the subscriber VLAN ID, step 206-3 is performed continuously.

Step 206-3: The ONT searches for, through the obtained subscriber GEM port-ID, a multicast subscriber information entity matched with the subscriber GEM port-ID.

The multicast subscriber information entity also includes the subscriber GEM port-ID, the ONT finds, by comparing the subscriber GEM port-ID obtained through step 203 with the subscriber GEM port-ID in the multicast subscriber information entity, the multicast subscriber information entity matched with the subscriber GEM port-ID of the STB, that is, uniquely determines the multicast subscriber information entity; if the ONT finds the multicast subscriber information entity matched with the subscriber GEM port-ID, that is, the ONT can uniquely determine the multicast subscriber information entity, step 208 is performed; and if the ONT does not find the multicast subscriber information entity matched with the subscriber GEM port-ID, step 207 is performed.

That is to say, if the ONT cannot uniquely determine the multicast subscriber information entity through the foregoing step 206-1, step 206-2, and step 206-3, the step 207 is performed; and if the ONT can uniquely determine the multicast subscriber information entity, the step 208 is performed.

Step 207: The ONT reports a subscriber authentication failure message to the OLT.

Step 208: The ONT uniquely determines an ACL entry according to the uniquely determined multicast subscriber information entity, and creates and delivers the layer 2 forwarding entry according to the uniquely determined ACL entry.

The ONT uniquely determines, according to the foregoing multicast subscriber information entity that is uniquely determined and the correspondence between the ACL entry and the multicast subscriber information entity, an ACL entry corresponding to the multicast subscriber information entity, so as to uniquely determine an MVLAN ID. The ONT creates the layer 2 forwarding entry according to the MMAC address determined through step 203, the uniquely determined MVLAN ID and the number of the LAN port connected to the STB (MMAC address + MVLAN ID→Port Number), and then the ONT delivers the layer 2 forwarding entry, gets through a forwarding channel from the PON port of the ONT to the LAN port of the ONT, and sends the IGMP join packet to the OLT.

The foregoing description is the method for implementing interworking multicast in a passive optical network provided in the embodiment of the present invention; and the method is further applicable to that a BMS (Business Management System, business management system) network manager manages, through an OLT, interworking multicast configuration of an ONT, and includes steps as follows: the BMS network manager first delivers interworking multicast configuration to the OLT, where the interworking multicast configuration includes a multicast subscriber configuration information entity, a multicast operations profile entity, and a multicast subscriber information entity; other steps are the same as step 201 to step 208 in the foregoing.

The method for implementing interworking multicast in a passive optical network provided in the embodiment of the present invention is mainly applicable to a case that an OLT manages an ONT through an OMCI channel. The method provided in the embodiment of the present invention is also applicable to a case that an ITMS (Internet Terminal ManaGEMent System, Internet terminal management system) server manages an ONT through a TR069 channel. Specific implementation steps are similar to step 201 to step 208 in the foregoing, and interworking multicast can be implemented as long as the OLT in the foregoing steps is replaced with the ITMS.

With the method for implementing interworking multicast in a passive optical network provided in the embodiment of the present invention, a multicast subscriber information entity is delivered when interworking multicast configuration is performed on an ONT, and in a scenario in which multiple subscribers of interworking multicast in a GPON watch the same program in multiple MVLANs, an ACL is uniquely determined by comparing multicast subscriber information obtained according to an IGMP join packet sent by a subscriber with effective subscriber information in the multicast subscriber information entity, so as to uniquely determine an MVLAN ID, and smoothly create a layer 2 forwarding entry, thereby implementing interworking multicast in a passive optical network, and saving a layer 2 forwarding entry resource, so that normal monitoring of a multicast service is not affected.

Based on the method for implementing interworking multicast in a passive optical network provided in the embodiment of the present invention, an embodiment of the present invention further provides a system for implementing interworking multicast in a passive optical network, where the system includes an OLT, an ONT, and a subscriber terminal. The OLT is configured to send a multicast operations profile entity and a multicast subscriber information entity to the ONT, where the multicast operations profile entity includes a dynamic access control list ACL, and preset correspondence exists between the multicast subscriber information entity and an ACL entry of the multicast operations profile entity; the subscriber terminal is configured to send an IGMP join packet to the ONT; and the ONT is configured to receive the IGMP join packet, obtain multicast subscriber information carried in the IGMP join packet, search for a multicast subscriber information entity matched with the multicast subscriber information that is obtained from the IGMP join packet, uniquely determine, according to the correspondence between the multicast subscriber information entity and the ACL entry, an ACL entry corresponding to the found multicast subscriber information entity, and create a layer 2 forwarding entry according to the uniquely determined ACL entry.

The multicast subscriber information entity is used to identify effective multicast subscriber information, including a subscriber VLAN ID, a subscriber MAC address, and a subscriber GEM port-ID; in addition, the multicast subscriber information entity further includes a ACL pointer, where the ACL pointer is used to point to an ACL entry corresponding to the multicast subscriber information entity in the multicast operations profile entity.

The multicast subscriber information obtained from the IGMP join packet by the ONT includes a subscriber MAC address of demanding a multicast program, and the subscriber VLAN ID, and the ONT may further be configured to obtain, according to the subscriber VLAN ID obtained from the IGMP join packet, a multicast subscriber GEM port-ID corresponding to a subscriber GEM port channel that bears the IGMP join packet of the multicast subscriber.

The ONT may compare the multicast subscriber information obtained according to the IGMP join packet with the effective subscriber information in the multicast subscriber information entity in a process of searching for the multicast subscriber information entity matched with the multicast subscriber information that is obtained from the IGMP join packet; and if at least one of the three: the subscriber MAC address and the subscriber VLAN ID that are obtained from the IGMP join packet and the subscriber GEM port-ID that is obtained according to the VLAN ID matches with an effective subscriber MAC address, subscriber VLAN ID, and subscriber GEM port-ID in the multicast subscriber information entity, uniquely determine the multicast subscriber information entity.

In addition, the ONT may further be configured to convert a multicast program IP address borne in the IGMP join packet into a multicast MAC address, and obtain a multicast virtual local area network identifier MVLAN ID from the uniquely determined ACL entry. In a process of creating the layer 2 forwarding entry, the ONT may create the layer 2 forwarding entry according to the MVLAN ID obtained from the uniquely determined ACL entry, the multicast MAC address, and a number of a local area network port connected to the subscriber terminal, and get through a channel from a passive optical network port of the ONT to the local area network port according to the layer 2 forwarding entry.

Further, if the ONT does not find, by comparing the multicast subscriber information obtained from the IGMP message with the effective multicast subscriber information in the multicast subscriber information entity, the multicast subscriber information entity matched with the multicast subscriber information that is obtained from the IGMP join packet, the ONT sends an authentication failure message.

Each ACL entry of the multicast operations profile entity includes a multicast program starting IP address and a multicast program ending IP address, where the ONT may further be configured to determine whether an IP address of a demanded multicast program is between the multicast program starting IP address and the multicast program ending IP address of the ACL entry; if the multicast program IP address is not between the multicast program starting IP address and the multicast program ending IP address of the ACL entry, demanding of the multicast program fails; if the multicast program IP address is between the multicast program starting IP address and the multicast program ending IP address of the ACL entry, and only one ACL entry meets this condition, a unique MVLAN ID is obtained from the unique ACL entry, and the layer 2 forwarding entry is created according to the multicast MAC address, the MVLAN ID, and a number of a local area network port connected to the subscriber terminal; and if multiple ACL entries meet this condition, multicast subscriber information entities corresponding to the multiple ACL entries are found and are used as multicast subscriber information entities used to be compared with and matched with the multicast subscriber information obtained by the IGMP join packet.

A system for implementing interworking multicast in a passive optical network provided in another embodiment of the present invention may include an ITMS server, an optical network terminal ONT, and a subscriber terminal. The ITMS server is configured to send a multicast operations profile entity and a multicast subscriber information entity to the ONT, where the multicast operations profile entity includes a dynamic access control list ACL, and correspondence exists between the multicast subscriber information entity and an ACL entry of the multicast operations profile entity.

The multicast subscriber information entity is used to identify effective multicast subscriber information, including a subscriber VLAN ID, a subscriber MAC address, and a subscriber GEM port-ID; in addition, the multicast subscriber information entity further includes an ACL pointer, where the ACL pointer is used to point to an ACL entry corresponding to the multicast subscriber information entity in the multicast operations profile entity.

In the system embodiment, the ITMS may manage the ONT through a TR069 channel, and may execute a main function of the OLT in the foregoing embodiment in a process of implementing interworking multicast in a passive optical network. Functions of the subscriber terminal and the ONT are the same as functions of the subscriber terminal and the ONT in the foregoing system embodiment.

It can be seen from the foregoing description that with the system for implementing interworking multicast in a passive optical network provided in the embodiment of the present invention, a purpose of saving a layer 2 forwarding entry resource of an ONT without affecting normal monitoring of a multicast service may also be achieved.

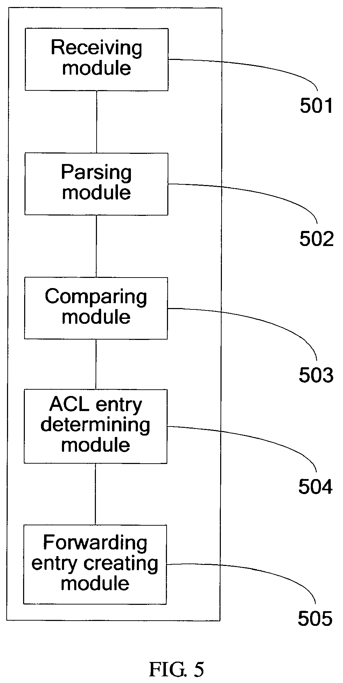

Based on the method and the system for implementing interworking multicast in a passive optical network provided in the embodiment of the present invention, an embodiment of the present invention further provides an apparatus for implementing interworking multicast in a passive optical network, and as shown in FIG. 5, the apparatus may include a receiving module 501, a parsing module 502, a comparing module 503, an ACL entry determining module 504, and a forwarding entry creating module 505, where
the receiving module 501 is configured to receive a multicast operations profile entity and a multicast subscriber information entity from a central office equipment, and receive an Internet group management protocol IGMP join packet from a subscriber terminal, where the multicast operations profile entity includes a dynamic access control list ACL, and correspondence exists between the multicast subscriber information entity and an ACL entry of the multicast operations profile entity;
the parsing module 502 is configured to parse the IGMP join packet to obtain multicast subscriber information carried in the IGMP join packet;
the comparing module 503 is configured to search for a multicast subscriber information entity matched with the multicast subscriber information that is obtained from the IGMP join packet;
an ACL entry determining module 504 is configured to uniquely determine, according to the correspondence between the multicast subscriber information entity and the ACL entry, an ACL entry corresponding to the found multicast subscriber information entity; and
a forwarding entry creating module 505, configured to create a layer 2 forwarding entry according to the uniquely determined ACL entry.

The multicast subscriber information entity is used to identify effective multicast subscriber information, including a subscriber VLAN ID, a subscriber MAC address, and a subscriber GEM port-ID; in addition, each multicast subscriber information entity further includes an ACL pointer, where the ACL pointer is used to point to an ACL entry corresponding to the multicast subscriber information entity in the multicast operations profile entity.

The multicast subscriber information obtained from the IGMP join packet by the parsing module 502 includes a subscriber MAC address of demanding a multicast program and the subscriber VLAN ID, and the parsing module 502 is further configured to obtain, according to the subscriber VLAN ID obtained from the IGMP join packet, a multicast subscriber GEM-port-ID borne in the IGMP join packet.

The comparing module 503 may compare the multicast subscriber information obtained according to the IGMP join packet with the effective subscriber information in the multicast subscriber information entity in a process of searching for the multicast subscriber information entity matched with the multicast subscriber information that is obtained from the IGMP join packet; and if at least one of the three: the subscriber MAC address and the subscriber VLAN ID that are obtained from the IGMP join packet and the subscriber GEM port-ID that is obtained according to the VLAN ID matches with an effective subscriber MAC address, subscriber VLAN ID, and subscriber GEM port-ID in the multicast subscriber information entity, uniquely determine the multicast subscriber information entity.

The parsing module may further be configured to convert a multicast program IP address borne in the IGMP join packet into a multicast MAC address; the ACL entry determining module may further be configured to obtain a multicast virtual local area network identifier MVLAN ID from the uniquely determined ACL entry; and in a process of creating the layer 2 forwarding entry, the forwarding entry creating module may create the layer 2 forwarding entry according to the MVLAN ID obtained from the uniquely determined ACL entry, the multicast MAC address, and a number of a local area network port connected to the subscriber terminal, where the layer 2 forwarding entry is used to get through a channel from a passive optical network port of the ONT to the local area network port.

If the comparing module 503 does not find, by comparing the multicast subscriber information obtained from the IGMP message with the effective multicast subscriber information in the multicast subscriber information entity, the multicast subscriber information entity matched with the multicast subscriber information that is obtained from the IGMP join packet, the sending module 505 sends an authentication failure message.

It can be seen from the foregoing description that with the apparatus for implementing interworking multicast in a passive optical network provided in the embodiment of the present invention, a technical effect of saving a layer 2 forwarding entry resource of an ONT without affecting normal monitoring of a multicast service may also be achieved.

Through the description of the foregoing embodiments, persons skilled in the art may clearly understand that the present invention may be implemented through software plus a necessary hardware platform, and definitely, may also be implemented entirely through hardware. Based on this understanding, the technical solution or the part that makes contributions to the background may be substantially embodied in the form of a software product. The computer software product may be stored in a computer storage medium such as a ROM/RAM, a magnetic disk, or an optical disk, and include several instructions to instruct a computer equipment (which may be a personal computer, a server, or a network equipment) to perform the method described in the embodiments or in some parts of the embodiments of the present invention.

The foregoing descriptions are only exemplary embodiments of the present invention, but are not intended to limit the protection scope of the present invention. Therefore, the protection scope of the present invention shall be subject to the protection scope of the claims.

## Claims

1. A method for implementing multicast in a passive optical network, comprising:
receiving (201) a multicast operations profile entity and a multicast subscriber information entity, wherein the multicast operations profile entity comprises a dynamic access control list, ACL, and correspondence exists between the multicast subscriber information entity and an ACL entry of the multicast operations profile entity; wherein each multicast subscriber information entity comprises an ACL pointer, and the ACL pointer is used to point to the ACL entry corresponding to the multicast subscriber information entity in the multicast operations profile entity;
receiving (203) an Internet group management protocol, IGMP, join packet, and obtaining multicast subscriber information carried in the IGMP join packet;
searching (204) for a multicast subscriber information entity matched with the multicast subscriber information that is obtained from the IGMP join packet;
uniquely determining, according to the correspondence between the multicast subscriber information entity and the ACL entry, an ACL entry corresponding to the found multicast subscriber information entity; and
creating (205) a layer 2 forwarding entry according to the uniquely determined ACL entry.

2. The method according to claim 1, wherein the multicast subscriber information obtained from the IGMP join packet comprises a subscriber MAC address and a subscriber VLAN ID of a multicast subscriber demanding a multicast program, and the method further comprises:
obtaining, according to the subscriber VLAN ID obtained from the IGMP join packet, a multicast subscriber GEM port-ID corresponding to a subscriber GEM port channel that bears the IGMP join packet of the multicast subscriber.

3. The method according to claim 2, wherein the multicast subscriber information entity is used to identify effective multicast subscriber information, comprising an effective subscriber VLAN ID, subscriber MAC address, and subscriber GEM port-ID; and the searching for a multicast subscriber information entity matched with the multicast subscriber information that is obtained from the IGMP join packet comprises:
comparing the multicast subscriber information obtained from the IGMP join packet with the effective multicast subscriber information in the multicast subscriber information entity, and if at least one of the three: the subscriber MAC address and the subscriber VLAN ID that are obtained from the IGMP join packet and the subscriber GEM port-ID that is obtained according to the VLAN ID matches with the effective subscriber MAC address, subscriber VLAN ID, and subscriber GEM port-ID in the multicast subscriber information entity, uniquely determining the multicast subscriber information entity.

4. The method according to claim 3, wherein the creating a layer 2 forwarding entry according to the uniquely determined ACL entry comprises:
converting a multicast program IP address borne in the IGMP join packet into a multicast MAC address;
obtaining a multicast virtual local area network identifier MVLAN ID from the uniquely determined ACL entry; and
creating the layer 2 forwarding entry according to the MVLAN ID obtained from the uniquely determined ACL entry, the multicast MAC address, and a number of a local area network port connected to a subscriber terminal sending the IGMP join packet, and getting through a channel from a passive optical network port of the ONT to the local area network port according to the layer 2 forwarding entry.

5. The method according to claim 3, wherein an authentication failure message is sent if no multicast subscriber information entity matched with the multicast subscriber information that is obtained from the IGMP join packet is found by comparing the multicast subscriber information obtained from the IGMP message with the effective multicast subscriber information in the multicast subscriber information entity.

6. The method according to claim 1, wherein each ACL entry of the multicast operations profile entity comprises a multicast program starting IP address and a multicast program ending IP address; and wherein
the method further comprises: determining whether a multicast program IP address borne in the IGMP join packet is between the multicast program starting IP address and the multicast program ending IP address of the ACL entry;
if the multicast program IP address is not between the multicast program starting IP address and the multicast program ending IP address of the ACL entry, failing to demand a multicast program;
if the multicast program IP address is between the multicast program starting IP address and the multicast program ending IP address of the ACL entry, and only one ACL entry meets this condition, obtaining a unique MVLAN ID from the unique ACL entry, and creating the layer 2 forwarding entry according to a multicast MAC address corresponding to the multicast program IP address, the MVLAN ID, and a number of a local area network port connected to a subscriber terminal sending the IGMP join packet; and
if multiple ACL entries meet this condition, finding multicast subscriber information entities corresponding to the multiple ACL entries, wherein the multiple multicast subscriber information entities are used as multicast subscriber information entities used to be compared with and matched with the multicast subscriber information obtained from the IGMP join packet.

7. An apparatus for implementing multicast in a passive optical network, comprising:
a receiving module (501), configured to receive a multicast operations profile entity, a multicast subscriber information entity, and an Internet group management protocol, IGMP, join packet, wherein the multicast operations profile entity comprises a dynamic access control list, ACL, and preset correspondence exists between the multicast subscriber information entity and an ACL entry of the multicast operations profile entity; wherein each multicast subscriber information entity comprises an ACL pointer, and the ACL pointer is used to point to the ACL entry corresponding to the multicast subscriber information entity in the multicast operations profile entity;
a parsing module (502), configured to parse the IGMP join packet to obtain multicast subscriber information carried in the IGMP join packet;
a comparing module (503), configured to search for a multicast subscriber information entity matched with the multicast subscriber information that is obtained from the IGMP join packet;
an ACL entry determining module (504), configured to uniquely determine, according to the correspondence between the multicast subscriber information entity and the ACL entry, an ACL entry corresponding to the found multicast subscriber information entity; and
a forwarding entry creating module (505), configured to create a layer 2 forwarding entry according to the uniquely determined ACL entry.

8. The apparatus according to claim 7, wherein the multicast subscriber information obtained from the IGMP join packet by the parsing module (502) comprises a subscriber MAC address of a multicast program, and a subscriber VLAN ID; and
the parsing module (502) is further configured to obtain, according to the subscriber VLAN ID obtained from the IGMP join packet, a multicast subscriber GEM-port-ID borne in the IGMP join packet.

9. The apparatus according to claim 8, wherein the multicast subscriber information entity is used to identify effective multicast subscriber information, comprising an effective subscriber VLAN ID, the subscriber MAC address, and the subscriber GEM port-ID; and the comparing module (503) compares the multicast subscriber information obtained according to the IGMP join packet with the effective subscriber information in the multicast subscriber information entity in a process of searching for the multicast subscriber information entity matched with the multicast subscriber information that is obtained from the IGMP join packet, and if at least one of the three: the subscriber MAC address and the subscriber VLAN ID that are obtained from the IGMP join packet and the subscriber GEM port-ID that is obtained according to the VLAN ID matches with the effective subscriber MAC address, the subscriber VLAN ID, and the subscriber GEM port-ID in the multicast subscriber information entity, uniquely determines the multicast subscriber information entity.

10. The apparatus according to claim 7, wherein the parsing module (502) is further configured to convert a multicast program IP address borne in the IGMP join packet into a multicast MAC address; the ACL entry determining module (504) is further configured to obtain a multicast virtual local area network identifier MVLAN ID from the uniquely determined ACL entry; and in a process of creating the layer 2 forwarding entry, the forwarding entry creating module (505) creates the layer 2 forwarding entry according to the MVLAN ID obtained from the uniquely determined ACL entry, the multicast MAC address, and a number of a local area network port connected to a subscriber terminal, wherein the layer 2 forwarding entry is used to get through a channel from a passive optical network port of the ONT to the local area network port.

11. A system for implementing multicast in a passive optical network, comprising a central office equipment, an optical network terminal, ONT, and a subscriber terminal, wherein the ONT comprises the apparatus for implementing multicast in a passive optical network according to any one of claims 7 to 10.

## Patentansprüche

1. Verfahren zum Implementieren von Multicast in einem passiven optischen Netzwerk, umfassend:
Empfangen (201) einer Multicast-Operationsprofilentität und einer Multicast-Teilnehmerinformationsentität, wobei die Multicast-Operationsprofilentität eine dynamische Zugangskontrollliste ACL umfasst und eine Korrespondenz zwischen der Multicast-Teilnehmerinformationsentität und einem ACL-Eintrag der Multicast-Operationsprofilentität besteht; wobei jede Multicast-Teilnehmerinformationsentität einen ACL-Zeiger umfasst und der ACL-Zeiger zum Zeigen auf den ACL-Eintrag verwendet wird, der der Multicast-Teilnehmerinformationsentität in der Multicast-Operationsprofilentität entspricht;
Empfangen (203) eines "Internet Group Management Protocol"- bzw. IGMP-"Join"Pakets und Erhalten von in dem IGMP-"Join"-Paket geführten MulticastTeilnehmerinformationen;
Suchen (204) nach einer Multicast-Teilnehmerinformationsentität, die mit den Multicast-Teilnehmerinformationen abgestimmt ist, die aus dem IGMP-"Join"-Paket erhalten werden;
eindeutiges Bestimmen eines der gefundenen Multicast-Teilnehmerinformationsentität entsprechenden ACL-Eintrags gemäß der Korrespondenz zwischen der Multicast-Teilnehmerinformationsentität und dem ACL-Eintrag; und
Erstellen (205) eines Weiterleitungseintrags der Schicht 2 gemäß dem eindeutig bestimmten ACL-Eintrag.

2. Verfahren nach Anspruch 1, wobei die aus dem IGMP-"Join"-Paket erhaltenen Multicast-Teilnehmerinformationen eine Teilnehmer-MAC-Adresse und eine Teilnehmer-VLAN-ID eines Multicast-Teilnehmers, der ein Multicast-Programm verlangt, umfassen und das Verfahren ferner Folgendes umfasst:
Erhalten einer Multicast-Teilnehmer-GEM-Port-ID, die einem Teilnehmer-GEM-Portkanal entspricht, der das IGMP-"Join"-Paket des Multicast-Teilnehmers trägt, gemäß der aus dem IGMP-"Join"-Paket erhaltenen Teilnehmer-VLAN-ID.

3. Verfahren nach Anspruch 2, wobei die Multicast-Teilnehmerinformationsentität zum Identifizieren effektiver Multicast-Teilnehmerinformationen verwendet wird, die eine effektive Teilnehmer-VLAN-ID, Teilnehmer-MAC-Adresse und Teilnehmer-GEM-Port-ID umfassen; und das Suchen nach einer mit den Multicast-Teilnehmerinformationen, die aus dem IGMP-"Join"-Paket erhalten werden, abgestimmten Multicast-Teilnehmerinformationsentität Folgendes umfasst:
Vergleichen der aus dem IGMP-"Join"-Paket erhaltenen Multicast-Teilnehmerinformationen mit den effektiven Multicast-Teilnehmerinformationen in der Multicast-Teilnehmerinformationsentität, und wenn mindestens eines der folgenden drei: Teilnehmer-MAC-Adresse und Teilnehmer-VLAN-ID, die aus dem IGMP"Join"-Paket erhalten werden, und Teilnehmer-GEM-Port-ID, die gemäß der VLAN-ID erhalten wird, mit der effektiven Teilnehmer-MAC-Adresse, Teilnehmer-VLAN-ID und Teilnehmer-GEM-Port-ID in der Multicast-Teilnehmerinformationsentität übereinstimmt, eindeutiges Bestimmen der Multicast-Teilnehmerinformationsentität.

4. Verfahren nach Anspruch 3, wobei das Erstellen eines Weiterleitungseintrags der Schicht 2 gemäß dem eindeutig bestimmten ACL-Eintrag Folgendes umfasst:
Umsetzen einer in dem IGMP-"Join"-Paket geführten Multicast-Programm-IP-Adresse in eine Multicast-MAC-Adresse;
Erhalten einer Multicast-Virtuelles-Lokales-Netzwerk-Kennung MVLAN ID aus dem eindeutig bestimmten ACL-Eintrag; und
Erstellen des Weiterleitungseintrags der Schicht 2 gemäß der aus dem eindeutig bestimmten ACL-Eintrag erhaltenen MVLAN ID, der Multicast-MAC-Adresse und einer Nummer eines lokalen Netzwerkports, der mit einem Teilnehmerendgerät verbunden ist, das das IGMP-"Join"-Paket sendet, und Hindurchkommen durch einen Kanal von einem passiven optischen Netzwerkport des ONT zu dem lokalen Netzwerkport gemäß dem Weiterleitungseintrag der Schicht 2.

5. Verfahren nach Anspruch 3, wobei eine Authentifikation-Fehlschlagnachricht gesendet wird, wenn durch Vergleichen der aus der IGMP-Nachricht erhaltenen Multicast-Teilnehmerinformationen mit den effektiven Multicast-Teilnehmerinformationen in der Multicast-Teilnehmerinformationsentität keine Multicast-Teilnehmerinformationsentität gefunden wird, die mit den Multicast-Teilnehmerinformationen abgestimmt ist, die aus dem IGMP-"Join"-Paket erhalten werden.

6. Verfahren nach Anspruch 1, wobei jeder ACL-Eintrag der Multicast-Operationsprofilentität eine Multicast-Programmstart-IP-Adresse und eine Multicast-Programmende-IP-Adresse umfasst; und wobei
das Verfahren ferner Folgendes umfasst: Bestimmen, ob eine in dem IGMP-"Join"Paket geführte Multicast-Programm-IP-Adresse zwischen der Multicast-Programmstart-IP-Adresse und der Multicast-Programmende-IP-Adresse des ACL-Eintrags liegt;
wenn die Multicast-Programm-IP-Adresse nicht zwischen der Multicast-Programmstart-IP-Adresse und der Multicast-Programmende-IP-Adresse des ACL-Eintrags liegt, kein Multicast-Programm verlangen;
wenn die Multicast-Programm-IP-Adresse zwischen der Multicast-Programmstart-IP-Adresse und der Multicast-Programmende-IP-Adresse des ACL-Eintrags liegt und nur ein ACL-Eintrag diese Bedingung erfüllt, Erhalten einer eindeutigen MVLAN ID aus dem eindeutigen ACL-Eintrag und Erzeugen des Weiterleitungseintrags der Schicht 2 gemäß einer der Multicast-Programm-IP-Adresse entsprechenden Multicast-MAC-Adresse, der MVLAN ID und einer Nummer eines lokalen Netzwerkports, der mit einem Teilnehmerendgerät verbunden ist, das das IGMP-"Join"Paket sendet; und
wenn mehrere ACL-Einträge diese Bedingung erfüllen, Finden von den mehreren ACL-Einträgen entsprechenden Multicast-Teilnehmerinformationsentitäten, wobei die mehreren Multicast-Teilnehmerinformationsentitäten als Multicast-Teilnehmerinformationsentitäten verwendet werden, die zum Vergleich mit und Abstimmung mit den aus dem IGMP-"Join"-Paket erhaltenen Multicast-Teilnehmerinformationen verwendet werden.

7. Vorrichtung zum Implementieren von Multicast in einem passiven optischen Netzwerk, umfassend:
ein Empfangsmodul (501), ausgelegt zum Empfangen einer Multicast-Operationsprofilentität, einer Multicast-Teilnehmerinformationsentität und eines "Internet Group Management Protocol"-bzw. IGMP-"Join"-Pakets, wobei die Multicast-Operationsprofilentität eine dynamische Zugangskontrollliste ACL umfasst und eine voreingestellte Korrespondenz zwischen der Multicast-Teilnehmerinformationsentität und einem ACL-Eintrag der Multicast-Operationsprofilentität besteht; wobei jede Multicast-Teilnehmerinformationsentität einen ACL-Zeiger umfasst und der ACL-Zeiger zum Zeigen auf den ACL-Eintrag verwendet wird, der der Multicast-Teilnehmerinformationsentität in der Multicast-Operationsprofilentität entspricht;
ein Analysemodul (502), ausgelegt zum Analysieren des IGMP-"Join"-Pakets, um in dem IGMP-"Join"-Paket geführte Multicast-Teilnehmerinformationen zu erhalten;
ein Vergleichsmodul (503), ausgelegt zum Suchen nach einer Multicast-Teilnehmerinformationsentität, die mit den Multicast-Teilnehmerinformationen abgestimmt ist, die aus dem IGMP-"Join"-Paket erhalten werden;
ein ACL-Eintragsbestimmungsmodul (504), ausgelegt zum eindeutigen Bestimmen eines der gefundenen Multicast-Teilnehmerinformationsentität entsprechenden ACL-Eintrags gemäß der Korrespondenz zwischen der Multicast-Teilnehmerinformationsentität und dem ACL-Eintrag; und
ein Weiterleitungseintrag-Erstellungsmodul (505), ausgelegt zum Erstellen eines Weiterleitungseintrags der Schicht 2 gemäß dem eindeutig bestimmten ACL-Eintrag.

8. Vorrichtung nach Anspruch 7, wobei die durch das Analysemodul (502) aus dem IGMP-"Join"-Paket erhaltenen Multicast-Teilnehmerinformationen eine Teilnehmer-MAC-Adresse eines Multicast-Programms und eine Teilnehmer-VLAN-ID umfassen; und
das Analysemodul (502) ferner ausgelegt ist zum Erhalten einer in dem IGMP"Join"-Paket geführten Multicast-Teilnehmer-GEM-Port-ID gemäß der aus dem IGMP-"Join"-Paket erhaltenen Teilnehmer-VLAN-ID.

9. Vorrichtung nach Anspruch 8, wobei die Multicast-Teilnehmerinformationsentität zum Identifizieren effektiver Multicast-Teilnehmerinformationen verwendet wird, die eine effektive Teilnehmer-VLAN-ID, die Teilnehmer-MAC-Adresse und die Teilnehmer-GEM-Port-ID umfassen; und das Vergleichsmodul (503) die gemäß dem IGMP-"Join"-Paket erhaltenen Multicast-Teilnehmerinformationen in einem Prozess des Suchens nach der Multicast-Teilnehmerinformationsentität, die mit den Multicast-Teilnehmerinformationen abgestimmt ist, die aus dem IGMP-"Join"-Paket erhalten werden, mit den effektiven Teilnehmerinformationen in der Multicast-Teilnehmerinformationsentität vergleicht, und wenn mindestens eines der folgenden drei: Teilnehmer-MAC-Adresse und Teilnehmer-VLAN-ID, die aus dem IGMP"Join"-Paket erhalten werden, und Teilnehmer-GEM-Port-ID, die gemäß der VLAN-ID erhalten wird, mit der effektiven Teilnehmer-MAC-Adresse, der Teilnehmer-VLAN-ID und der Teilnehmer-GEM-Port-ID in der Multicast-Teilnehmerinformationsentität übereinstimmt, eindeutiges Bestimmen der Multicast-Teilnehmerinformationsentität.

10. Vorrichtung nach Anspruch 7, wobei das Analysemodul (502) ferner ausgelegt ist zum Umsetzen einer in dem IGMP-"Join"-Paket geführten Multicast-Programm-IP-Adresse in eine Multicast-MAC-Adresse; das ACL-Eintragsbestimmungsmodul (504) ferner ausgelegt ist zum Erhalten einer Multicast-Virtuelles-Lokales-Netzwerk-Kennung MVLAN ID aus dem eindeutig bestimmten ACL-Eintrag; und in einem Prozess des Erstellens des Weiterleitungseintrags der Schicht 2 das Weiterleitungseintrags-Erstellungsmodul (505) den Weiterleitungseintrag der Schicht 2 gemäß der aus dem eindeutig bestimmten ACL-Eintrag erhaltenen MVLAN ID, der Multicast-MAC-Adresse und einer Nummer eines lokalen Netzwerkports, der mit einem Teilnehmerendgerät verbunden ist, erstellt, wobei der Weiterleitungseintrag der Schicht 2 verwendet wird zum Hindurchkommen durch einen Kanal von einem passiven optischen Netzwerkport des ONT zu dem lokalen Netzwerkport.

11. System zum Implementieren von Multicast in einem passiven optischen Netzwerk, das ein Vermittlungsstellengerät, ein optisches Netzwerkterminal ONT und ein Teilnehmerendgerät umfasst, wobei das ONT die Vorrichtung zum Implementieren von Multicast in einem passiven optischen Netzwerk nach einem der Ansprüche 7 bis 10 umfasst.

## Revendications

1. Procédé pour mettre en oeuvre une multidiffusion dans un réseau optique passif, comprenant les étapes suivantes :
recevoir (201) une entité de profil d'opérations de multidiffusion et une entité d'informations d'abonné de multidiffusion, l'entité de profil d'opérations de multidiffusion comprenant une liste de contrôle d'accès dynamique, ACL, et une correspondance existe entre l'entité d'informations d'abonné de multidiffusion et une entrée ACL de l'entité de profil d'opérations de multidiffusion ; chaque entité d'informations d'abonné de multidiffusion comprenant un pointeur ACL, et le pointeur ACL étant utilisé pour pointer vers l'entrée ACL correspondant à l'entité d'informations d'abonné de multidiffusion dans l'entité de profil d'opérations de multidiffusion ;
recevoir (203) un paquet joint de protocole de gestion de groupe Internet, IGMP, et obtenir des informations d'abonné de multidiffusion acheminées dans le paquet joint IGMP ;
rechercher (204) une entité d'informations d'abonné de multidiffusion qui correspond aux informations d'abonné de multidiffusion qui sont obtenues à partir du paquet joint IGMP ;
déterminer de manière unique, conformément à la correspondance entre l'entité d'informations d'abonné de multidiffusion et l'entrée ACL, une entrée ACL correspondant à l'entité d'informations d'abonné de multidiffusion trouvée ; et
créer (205) une entrée de transfert de couche 2 conformément à l'entrée ACL déterminée de manière unique.

2. Procédé selon la revendication 1, dans lequel les informations d'abonné de multidiffusion obtenues à partir du paquet joint IGMP comprennent une adresse MAC d'abonné et un ID de VLAN d'abonné d'un abonné de multidiffusion demandant un programme de multidiffusion, et le procédé comprend en outre les étapes suivantes :
obtenir, en fonction de l'ID de VLAN d'abonné obtenu à partir du paquet joint IGMP, un ID de port GEM d'abonné de multidiffusion correspondant à un canal de port GEM d'abonné qui achemine le paquet joint IGMP de l'abonné de multidiffusion.

3. Procédé selon la revendication 2, dans lequel l'entité d'informations d'abonné de multidiffusion est utilisée pour identifier des informations d'abonné de multidiffusion effectives, comprenant un ID de VLAN d'abonné, une adresse MAC d'abonné et un ID de port GEM d'abonné effectifs ; et la recherche d'une entité d'informations d'abonné de multidiffusion qui correspond aux informations d'abonné de multidiffusion qui sont obtenues à partir du paquet joint IGMP comprend les étapes suivantes :
comparer les informations d'abonné de multidiffusion obtenues à partir du paquet joint IGMP aux informations d'abonné de multidiffusion effectives dans l'entité d'informations d'abonné de multidiffusion et, si au moins un des trois éléments suivants : l'adresse MAC d'abonné, l'ID de VLAN d'abonné qui est obtenu à partir du paquet joint IGMP et l'ID de port GEM d'abonné qui est obtenu conformément à l'ID de VLAN correspond à l'adresse MAC, à l'ID de VLAN d'abonné et à l'ID de port GEM d'abonné effectifs dans l'entité d'informations d'abonné de multidiffusion, déterminer de manière unique l'entité d'informations d'abonné de multidiffusion.

4. Procédé selon la revendication 3, dans lequel la création d'une entrée de transfert de couche 2 conformément à l'entrée ACL déterminée de manière unique comprend les étapes suivantes :
convertir une adresse IP de programme de multidiffusion acheminée dans le paquet joint IGMP en une adresse MAC de multidiffusion ;
obtenir un identifiant de réseau local virtuel de multidiffusion, ID de MVLAN, à partir de l'entrée ACL déterminée de manière unique ; et
créer l'entrée de transfert de couche 2 conformément à l'ID de MVLAN obtenu à partir de l'entrée ACL déterminée de manière unique, de l'adresse MAC de multidiffusion et d'un numéro d'un port de réseau local connecté à un terminal d'abonné envoyant le paquet joint IGMP, et passer par un canal depuis un port de réseau optique passif de l'ONT jusqu'au port de réseau local conformément à l'entrée de transfert de couche 2.

5. Procédé selon la revendication 3, dans lequel un message d'échec d'authentification est envoyé si aucune entité d'informations d'abonné de multidiffusion qui correspond aux informations d'abonné de multidiffusion qui sont obtenues à partir du paquet joint IGMP n'est trouvée en comparant les informations d'abonné de multidiffusion obtenues à partir du message IGMP avec les informations d'abonné de multidiffusion effectives dans l'entité d'informations d'abonné de multidiffusion.

6. Procédé selon la revendication 1, dans lequel chaque entrée ACL de l'entité de profil d'opérations de multidiffusion comprend une adresse IP de démarrage de programme de multidiffusion et une adresse IP de fin de programme de multidiffusion ; et dans lequel
le procédé comprend en outre les étapes suivantes : déterminer si une adresse IP de programme de multidiffusion acheminée dans le paquet joint IGMP se situe entre l'adresse IP de démarrage de programme de multidiffusion et l'adresse IP de fin de programme de multidiffusion de l'entrée ACL ;
si l'adresse IP de programme de multidiffusion ne se situe pas entre l'adresse IP de démarrage de programme de multidiffusion et l'adresse IP de fin de programme de multidiffusion de l'entrée ACL, renoncer à effectuer une demande de programme de multidiffusion ;
si l'adresse IP de programme de multidiffusion se situe entre l'adresse IP de démarrage de programme de multidiffusion et l'adresse IP de fin de programme de multidiffusion de l'entrée ACL, et si uniquement une entrée ACL satisfait cette condition, obtenir un ID de MVLAN unique de l'entrée ACL unique, et créer l'entrée de transfert de couche 2 conformément à une adresse MAC de multidiffusion correspondant à l'adresse IP de programme de multidiffusion, à l'ID de MVLAN et à un numéro de port de réseau local connecté à un terminal d'abonné envoyant le paquet joint IGMP ; et
si les multiples entrées ACL satisfont cette condition, trouver des entités d'informations d'abonné de multidiffusion correspondant aux multiples entrées ACL, les multiples entités d'informations d'abonné de multidiffusion étant utilisées comme entités d'informations d'abonné de multidiffusion utilisées pour être comparées et mises en correspondance avec les informations d'abonné de multidiffusion obtenues du paquet joint IGMP.

7. Appareil pour mettre en oeuvre une multidiffusion dans un réseau optique passif, comprenant :
un module de réception (501), conçu pour recevoir une entité de profil d'opérations de multidiffusion, une entité d'informations d'abonné de multidiffusion et un paquet joint de protocole de gestion de groupe Internet, IGMP, l'entité de profil d'opérations de multidiffusion comprenant une liste de contrôle d'accès dynamique, ACL, et une correspondance prédéfinie existant entre l'entité d'informations d'abonné de multidiffusion et une entrée ACL de l'entité de profil d'opérations de multidiffusion ;
chaque entité d'informations d'abonné de multidiffusion comprenant un pointeur ACL, et le pointeur ACL étant utilisé pour pointer vers l'entrée ACL correspondant à l'entité d'informations d'abonné de multidiffusion dans l'entité de profil d'opérations de multidiffusion ;
un module d'analyse (502), configuré pour analyser le paquet joint IGMP pour obtenir des informations d'abonné de multidiffusion acheminées dans le paquet joint IGMP ;
un module de comparaison (503), configuré pour rechercher une entité d'informations d'abonné de multidiffusion qui correspond aux informations d'abonné de multidiffusion qui sont obtenues à partir du paquet joint IGMP ;
un module de détermination d'entrée ACL (504), configuré pour déterminer de manière unique, conformément à la correspondance entre l'entité d'informations d'abonné de multidiffusion et l'entrée ACL, une entrée ACL correspondant à l'entité d'informations d'abonné de multidiffusion trouvée ; et
un module de création d'entrée de transfert (505), configuré pour créer une entrée de transfert de couche 2 conformément à l'entrée ACL déterminée de manière unique.

8. Appareil selon la revendication 7, dans lequel les informations d'abonné de multidiffusion obtenues à partir du paquet joint IGMP par le module d'analyse (502) comprennent une adresse MAC d'abonné d'un programme de multidiffusion, et un ID de VLAN d'abonné ; et
le module d'analyse (502) est en outre configuré pour obtenir, en fonction de l'ID de VLAN d'abonné obtenu à partir du paquet joint IGMP, un ID de port GEM d'abonné de multidiffusion acheminé dans le paquet joint IGMP.

9. Appareil selon la revendication 8, dans lequel l'entité d'informations d'abonné de multidiffusion est utilisée pour identifier des informations d'abonné de multidiffusion effectives, comprenant un ID de VLAN d'abonné, l'adresse MAC d'abonné et l'ID de port GEM d'abonné effectifs ; et le module de comparaison (503) compare les informations d'abonné de multidiffusion obtenues conformément au paquet joint IGMP aux informations d'abonné effectives dans l'entité d'informations d'abonné de multidiffusion dans un processus de recherche de l'entité d'informations d'abonné de multidiffusion qui correspond aux informations d'abonné de multidiffusion qui sont obtenues à partir du paquet joint IGMP, et si au moins un des trois éléments suivants : l'adresse MAC d'abonné, l'ID de VLAN d'abonné qui est obtenu à partir du paquet joint IGMP et l'ID de port GEM d'abonné qui est obtenu conformément à l'ID de VLAN correspond à l'adresse MAC d'abonné, à l'ID de VLAN d'abonné et à l'ID de port GEM d'abonné effectifs dans l'entité d'informations d'abonné de multidiffusion, déterminer de manière unique l'entité d'informations d'abonné de multidiffusion.

10. Appareil selon la revendication 7, dans lequel le module d'analyse (502) est en outre configuré pour convertir une adresse IP de programme de multidiffusion acheminée dans le paquet joint IGMP en une adresse MAC de multidiffusion ; le module de détermination d'entrée ACL (504) est en outre configuré pour obtenir un identifiant de réseau local virtuel de multidiffusion, ID de MVLAN, à partir de l'entrée ACL déterminée de manière unique ; et, dans un processus de création de l'entrée de transfert de couche 2, le module de création d'entrée de transfert (505) crée l'entrée de transfert de couche 2 conformément à l'ID de MVLAN obtenu à partir de l'entrée ACL déterminée de manière unique, de l'adresse MAC de multidiffusion et d'un numéro d'un port de réseau local connecté à un terminal d'abonné, l'entrée de transfert de couche 2 étant utilisée pour passer par un canal depuis un port de réseau optique passif de l'ONT jusqu'au port de réseau local.

11. Système pour mettre en oeuvre une multidiffusion dans un réseau optique passif, comprenant un équipement de central, un terminal de réseau optique, ONT, et un terminal d'abonné, l'ONT comprenant l'appareil pour mettre en oeuvre une multidiffusion dans un réseau optique passif selon l'une quelconque des revendications 7 à 10.
